**Europäisches Patentamt**

**European Patent Office**

**Office européen des brevets**

(19)

(11) Veröffentlichungsnummer: **0 235 329**
**B1**

(12)

# EUROPÄISCHE PATENTSCHRIFT

(45) Veröffentlichungstag der Patentschrift:
**05.10.88**

(21) Anmeldenummer: **86102754.8**

(22) Anmeldetag: **03.03.86**

(51) Int. Cl.⁴: $G\ 01\ L\ 1/22$

(54) **Messfeder mit Dünnfilm-Dehnungsmessstreifenanordnung und Verfahren zur Herstellung einer Messfeder.**

(43) Veröffentlichungstag der Anmeldung:
**09.09.87 Patentblatt 87/37**

(45) Bekanntmachung des Hinweises auf die Patenterteilung:
**05.10.88 Patentblatt 88/40**

(84) Benannte Vertragsstaaten:
**CH DE GB LI**

(56) Entgegenhaltungen:
**US - A - 3 828 295**

**MESSEN UND PRÜFEN, Nr. 3, März 1982, Seiten 164-167, Bad Wörlshofen, DE: "Dünne Schichten für Messgrössenwandler"**
**PHILIPS TECHNICAL REVIEW, Band 39, Nr. 3/4, 1980, Seiten 94-101, Eindhoven, NL; K. BETHE et al.: "Thin-film strain-gauge transducers"**

(73) Patentinhaber: **HOTTINGER BALDWIN MESSTECHNIK GMBH, Im Tiefen See 45 Postfach 42 35, D-6100 Darmstadt (DE)**

(72) Erfinder: **Paul, Heinrich, Ahornweg 21, D-6078 Neu Isenburg (DE)**
Erfinder: **Smykalla, Norbert, Hermannstädter Weg 9, D-6100 Darmstadt (DE)**

(74) Vertreter: **Brand, Fritz, Dipl.-Ing., Hottinger Baldwin Messtechnik GmbH Patentabteilung Im Tiefen See 45 Postfach 42 35, D-6100 Darmstadt (DE)**

## Beschreibung

Die Erfindung betrifft eine mit einer Dünnfilm-Dehnungsmessstreifen-Anordnung versehene Messfeder für Messaufnehmer mit einer eine Siliciumdioxidschicht aufweisenden Isolation zwischen Messfeder und Dehnungsmessstreifen-Anordnung sowie ein Verfahren zur Herstellung einer Messfeder.

Messaufnehmer, bei denen zur Messung physikalischer Grössen wie beispielsweise Kräfte, Beschleunigungen oder Drücke Dehnungsmessstreifen verwendet werden, weisen als elastisches Element eine Messfeder auf, die durch die zu messende Grösse verformt wird und an der der Dehnungsmessstreifen angeordnet ist. Die Messfeder kann beispielsweise als Membran oder als Biegebalken ausgebildet sein. Der Dehnungsmessstreifen gibt verformungsabhängig eine Widerstandsänderung vor, mit deren Hilfe die elastische Verformung in ein elektrisches Signal umgewandelt wird.

Derartige Messfedern mit Dehnungsmessstreifen werden beispielsweise als Wägezellen von elektromechanischen Waagen eingesetzt, mit denen die physikalische Grösse Masse bzw. Gewichtskraft in eine elektrisches Signal umgesetzt wird. Bei kleinen Nennlasten werden Dünnfilm-Dehnungsmessstreifen-Anordnungen verwendet. Eine Messfeder mit einer derartigen Dehnungsmessstreifen-Anordnung ist aus der EP A2 01 29 166 bekannt. Auf der Messfeder ist eine elektrische Isolierschicht aus Siliciumdioxid vorgesehen, auf der die Dehnungsmessstreifen-Anordnung aufgebracht ist. Um eine vorgegebene Toleranzen überschreitende Veränderung der Kenndaten des Dehnungsmessstreifens durch Umgebungseinflüsse, insbesondere Feuchtigkeit zu verhindern, wie dies beispielsweise für Waagen für den eichpflichtigen Verkehr gefordert wird, muss insbesondere die Dehnungsmessstreifen-Anordnung gegen Umgebungseinflüsse, insbesondere gegen Feuchtigkeit geschützt sein.

Der Erfindung liegt deshalb die Aufgabe zugrunde, eine Messfeder mit einer sicher gegen Umgebungseinflüsse geschützten Dünnfilm-Dehnungsmessstreifen-Anordnung zu schaffen, die eine hohe Messgenauigkeit gewährleistet und die einfach aufgebaut und kostengünstig herstellbar ist, sowie ein Verfahren zur Herstellung der Messfeder anzugeben.

Diese Aufgabe wird erfindungsgemäss dadurch gelöst, dass als Isolation ein zumindest eine Siliciumdioxidschicht und zumindest eine Siliciumnitridschicht umfassendes Schichtsystem vorgesehen ist und dass eine zumindest die Dehnungsmessstreifen-Anordnung abdeckende Passivierung aus zumindest einer Schicht Silikon-Kautschuk vorgesehen ist.

Durch die Kombination mindestens einer Siliciumdioxidschicht, die eine zuverlässige elektrische Isolierung zwischen der Dehnungsmessstreifen-Anordnung und der Messfeder bewirkt, und mindestens einer Siliciumnitridschicht erhält man ein Schichtsystem mit hervorragenden Isolationseigenschaften, das sich zudem durch eine verschwindende Ionendiffusion zur Dehnungsmessstreifen-Anordnung hin auszeichnet und das darüber hinaus ein gutes Haftungsvermögen aufweist. Ionen, insbesondere Alkaliionen, die z.B. aus dem Messfedermaterial stammen oder die während des Schichtaufbaus in das Schichtsystem gelangt sind, können bei Anlagerung an die Grenzfläche der Dehnungsmessstreifen-Anordnung zur Isolierschicht die Kennwerte der Dehnungsmessstreifen verändern und eine unzulässig grosse Nullsignaldrift hervorrufen. Die Ionendiffusion wird grösser durch eine Temperaturerhöhung aufgrund von z.B. Umgebungseinflüssen und/oder durch eine über längere Zeit zwischen der Dehnungsmessstreifen-Anordnung und der Messfeder anliegende elektrische Spannung. Durch die als Diffusionssperre wirkende Siliciumnitridschicht wird eine Ionendiffusion in einem Ausmass, das zu unzulässigen Nullsignaldriften führen würde, auch bei Anliegen einer Spannung zwischen Dehnungsmessstreifen-Anordnung und Messfeder sowie bei erhöhten Temperaturen sicher unterbunden. Mit dem obigen Schichtsystem als Isolation wird eine Passivierung aus zumindest einer Silikon-Kautschukschicht eingesetzt. Durch die Silikon-Kautschukschicht, die zumindest die Dehnungsmessstreifen-Anordnung abdeckt, wird eine elektrolytische Zersetzung der Dünnfilmschichten bei angelegter Betriebsspannung verhindert. Die Verwendung von Silikon-Kautschuk ergibt einen vernachlässigbar kleinen Kraftnebenschluss ohne Auswirkungen auf den Kennwert, die relative Umkehrspanne (Hysterese) und das Kriechverhalten des Messaufnehmers. Die abgeglichene Messbrücke bzw. Wägezelle wird durch diese Passivierungsschicht nicht verstimmt. Überraschenderweise wird mit einer Passivierungsschicht aus Silikon-Kautschuk der erforderliche Feuchtigkeitsschutz erreicht, obwohl die Datenblätter für die entsprechenden Materialien eine Wasserpermeabilität verzeichnen. Insbesondere wird den Prüfvorschriften (Feuchtetest) für Wägezellen eichfähiger Waagen Genüge getan.

Eine bevorzugte Ausführungsform der Erfindung sieht eine Dicke der Siliciumdioxidschicht von mindestens 500 nm vor; die Dicke der Siliciumnitridschicht liegt bevorzugt bei 250 nm.

Wegen des guten Haftvermögens der Siliciumdioxidschicht insbesondere auf Metallen mit einer festhaftenden Oxidschicht, z.B. auf im Messaufnehmerbau üblichen hochlegierten Stählen wie z.B. Stahl nach der DIN-Werkstoff-Nr. 1. 4542, ist es vorteilhaft, dass die Siliciumdioxidschicht der Messfeder benachbart angeordnet ist.

Bei einer Ausführungsform, bei der das Schichtsystem der Isolation mehrere, insbesondere zwei aufeinanderfolgende Schichtfolgen aus je einer Siliciumdioxidschicht und einer Siliciumnitridschicht umfasst, können die Schichtdicken der einzelnen Schichten insbesondere die der Siliciumnitridschicht gering gehalten werden, was einen besonders eigenspannungsarmen Schichtaufbau ermöglicht. Dabei ist weiter vorteilhaft, dass eventuelle, beim Schichtbildungsprozess entstehende Fehlstellen (pinholes) sich pro Schicht aufgrund der mehrfach angeordneten Schichten an unterschiedlichen Orten — gesehen in Normalenrichtung — befinden und daher in Ausmass und Auswirkungen vernachlässigbar sind.

Eine Ausgestaltung der Erfindung, bei der zwischen Messfederoberfläche und Siliciumdioxidschicht eine Zwischenschicht zur Haftverbesserung vorgesehen ist, stellt eine gute Haftung unabhängig vom Material der Messfeder sicher.

Die Passivierungswirkung wird auf einfache Weise dadurch weiter verbessert, dass die Passivierung eine weitere zwischen Dehnungsmessstreifen-Anordnung und Silikon-Kautschukschicht angeordnete Schicht aus Chrom- und Siliciumoxiden umfasst.

Ein Verfahren zur Herstellung der erfindungsgemässen Messfeder ist dadurch gekennzeichnet, dass auf die Messfederoberfläche oder auf eine auf der Messfederoberfläche aufgebrachte Zwischenschicht eine Siliciumdioxidschicht als erste Schicht der Isolation und auf diese zumindest eine Schicht Siliciumnitrid aufgebracht wird, dass auf die Isolation die Dünnfilm-Dehnungsmessstreifen-Anordnung mit zugeordneter Kontaktierung aufgebracht wird, und dass das Ganze mit einer Passivierung aus zumindest einer Schicht Silikon-Kautschuk überzogen wird.

Eine vorteilhafte Weiterbildung des erfindungsgemässen Verfahrens sieht vor, dass die Schichtfolge aus je einer Schicht aus Siliciumdioxid und Siliciumnitrid mehrfach zwischen der Messfeder und der Dünnfilm-Dehnungsmessstreifen-Anordnung aufgebracht wird.

Eine vorteilhafte Ausgestaltung des erfindungsgemässen Verfahrens sieht vor, dass eine CrSi-Dehnungsmessstreifen-Anordnung aufgedampft wird und vor dem Aufbringen der Silikon-Kautschukschicht reaktiv eine Chrom- und Siliciumoxide aufweisende Schicht aufgedampft wird. Unmittelbar nach der Fertigstellung der Dehnungsmessstreifen-Anordnung durch Aufdampfen wird so ohne Zwischenbelüftung auf einfachste Weise eine Schicht aus Chrom- und Siliciumoxiden erzeugt, da zum Schichtaufbau die Bedampfung unter Einlassung von Sauerstoff bei einem geringeren Vakuum reaktiv weitergeführt wird. Die mit der Passivierungsschicht aus Silikon-Kautschukschicht geschützt.

Ausführungsbeispiele der Erfindung sind in der Zeichnung dargestellt und werden im folgenden einschliesslich von Herstellungsverfahren näher erläutert.

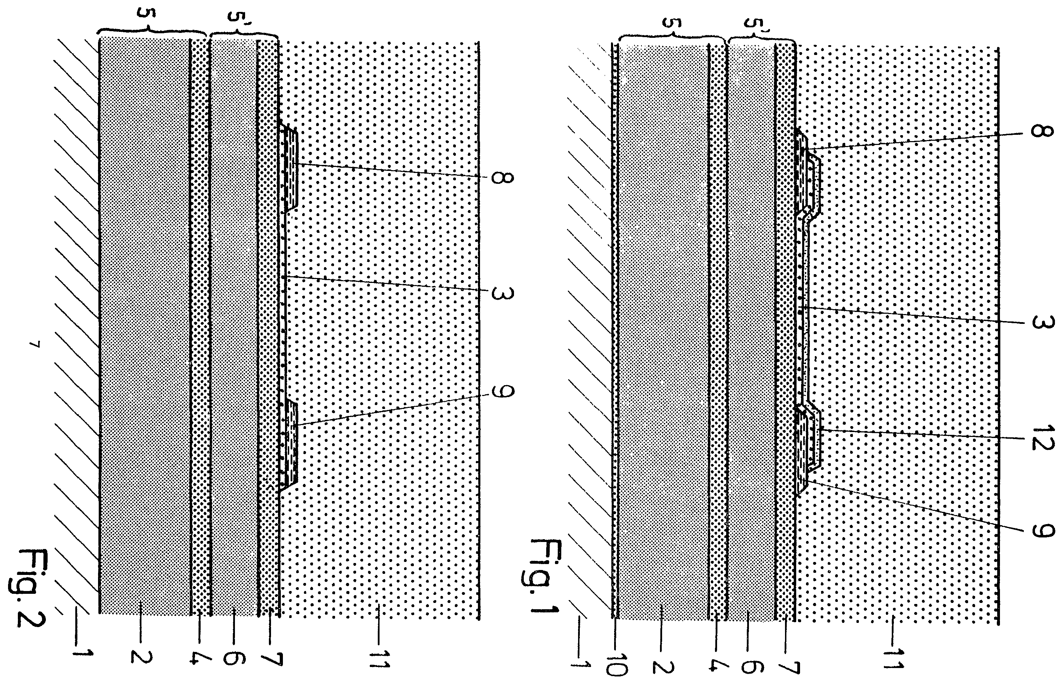

Es zeigen die Figuren 1 und 2 Messfedern mit Dehnungsmessstreifen-Anordnungen in schematischer Darstellung. Einander entsprechende Elemente sind in den Figuren mit gleichen Bezugszeichen versehen.

In der Figur 1 ist eine Messfeder 1 für Messaufnehmer schematisch dargestellt, die aus einer Kupfer-Beryllium-Legierung hergestellt ist. Auf die durch die zu messende Grösse elastisch verformbare Messfeder 1 wird eine Zwischenschicht 10 als Haftverbesserungsschicht aufgebracht, die somit zwischen der Oberfläche der Messfeder 1 und der noch aufzubringenden Isolation liegt.

Als Material einer derartigen Haftverbesserungsschicht kommen Chrom, Nickel oder eine Eisen-Chrom-Nickel-Legierung zum Einsatz. Diese Zwischenschicht 10 ist durch Kathodenzerstäubung oder durch Aufdampfen in Vakuum herstellbar und weist eine Dicke von ca. 100 nm auf. Auf die Zwischenschicht 10 ist eine 4000 nm dicke Siliciumdioxidschicht 2 als erste Schicht der zwischen der Messfeder 1 und der Dünnfilm-Dehnungsmessstreifen-Anordnung 3 anzuordnenden Isolation aufgebracht und auf diese eine 250 nm dicke Siliciumnitridschicht 4 als zweite Schicht der Isolation. Beide Schichten 2 und 4 bilden eine Schichtfolge 5 der Isolation. Auf die Siliciumnitridschicht 4 wird eine weitere Siliciumdioxidschicht 6 mit der Dicke 1500 nm und auf diese eine weitere Siliciumnitridschicht 7 der Dicke 250 nm aufgebracht. Die Schichten 6 und 7 bilden eine zweite Schichtfolge 5' der Isolation. Die Siliciumdioxid- und Siliciumnitridschichten 2, 6 bzw. 4, 7 der Isolation werden vorzugsweise durch Kathodenzerstäubung aufgebracht. Im Rahmen der Erfindung können diese Schichten 2, 6, 4, 7 jedoch auch durch andere geeignete Verfahren der Dünnschichttechnologie hergestellt werden; die Siliciumnitridschichten 4, 7 lassen sich beispielsweise in einer Gasphasenreaktion aus einer $SiH_4$- und Ammoniak-Atmosphäre abscheiden.

Auf diese Isolation werden leitfähige Schichten 8, 9 aus Gold durch Aufdampfen im Vakuum aufgebracht, die der Kontaktierung der anschliessend hergestellten Dünnfilm-Dehnungsmessstreifen 3 dienen. Andere geeignete Materialien hoher Leitfähigkeit können alternativ zum Einsatz kommen. Gegebenenfalls kann vor dem Aufdampfen der leitfähigen Schichten eine Haftverbesserungsschicht aus Chrom auf die Isolation aufgedampft werden.

Die Dünnfilm-Dehnungsmessstreifen Anordnung 3 wird durch Aufdampfen von Chrom und Silicium in Hochvakuum erzeugt. Die CrSi-Schicht kann jedoch auch durch Kathodenzerstäubung oder andere dem zuständigen Fachmann bekannte und geeignete Verfahren der Dünnschichttechnologie aufgebracht werden; dies gilt auch für Dehnungsmessstreifen-Schichten aus anderen geeigneten Materialien, z. B. für CrNi- oder $Ta_2N$-Schichten.

Im Anschluss an die Fertigstellung der Dehnungsmessstreifen-Anordnung 3 wird unter Zugabe von Sauerstoff die Bedampfung bei einem geringeren Vakuum (etwa $5 \times 10^{-5}$ mbar) reaktiv weitergeführt, so dass auf sehr einfache Weise ohne Zwischenbelüftung eine etwa 50-100 nm dicke Schutzschicht 12 aus Chrom- und Siliciumoxiden auf der Dehnungsmessstreifen-Anordnung erzeugt wird, die eine Passivierung bewirkt.

Auf das Ganze wird schliesslich eine Passivierung 11 aus Silikon-Kautschuk aufgesprüht, die zumindest die Dehnungsmessstreifen-Anordnung 3 überlappend abdeckt und die in einer Dicke zwischen 10 000 und 50 000 nm aufgebracht wird. Die Silikon-Kautschukschicht kann statt durch Sprühen auch durch Tauchen oder andere bekannte Verfahren aufgebracht werden; gegebenenfalls können Haftvermittler (auf Silan-Basis) zur Anwendung kommen.

Die Messfeder 1 der in Figur 2 schematisch dargestellten Anordnung ist aus einer FeCrNi-Legierung z. B. 1.4542 gefertigt. Direkt auf die Messfeder 1 ist eine Siliciumdioxid-Schicht 2 der Dicke 4000 nm als erste Schicht der Isolation und auf diese eine 250 nm dicke Siliciumnitridschicht 4 als zweite Schicht der Isolation aufgebracht. Wie in dem zuvor beschriebenen Beispiel wird auf die Siliciumnitridschicht 4 eine weitere 1500 nm dicke Siliciumdioxidschicht 6 und auf diese eine Siliciumnitridschicht 7 der Dicke 250 nm aufgebracht. Auf diese Isolation wird anschliessend durch Kathodenzerstäubung eine Chrom-Nickel-Schicht als Dünnfilm-Dehnungsmessstreifen-Anordnung 3 aufgebracht. Auf diese Widerstandsschicht werden gegebenenfalls mit einer Difusionssperre leitfähige Schichten 8, 9, aus Gold durch Kathodenzerstäubung aufgebracht, auf die schliesslich in der zuvor beschriebenen Weise die Passivierung 11 aus Silikon-Kautschuk aufgesprüht wird. Aufgrund des Materials der Messfeder 1 kann hier vom Aufbringen einer haftverbessernden Zwischenschicht zwischen Messfederoberfläche und Isolation abgesehen werden. Da die Herstellung der Dehnungsmessstreifen-Anordnung nach einem anderen als dem zuvor beschriebenen Verfahren erfolgt, würde die Herstellung einer Schutzschicht auf der Dehnungsmessstreifen-Anordnung im Vergleich zum vorhergehenden Ausführungsbeispiel einen zusätzlichen Aufwand bedeuten. Zweckmässigerweise ist deshalb für die Passivierung bei der vorliegenden Ausführungsform allein die Silikon-Kautschukschicht vorgesehen.

Mit der gemäss der Erfindung aufgebauten und hergestellten Messfeder lässt sich der für Wägezellen eichfähiger Waagen vorgeschriebene Feuchtetest (tägliche Temperaturzyklen von 25° bis 55° C bei gesättigter Luftfeuchte und zeitweiser Betauung über 50 Tage) sicher bestehen, was eine besondere Eignung der Messfeder für den Einsatz in eichpflichtigen Waagen bedeutet.

## Patentansprüche

1. Mit einer Dünnfilm-Dehnungsmessstreifen-Anordnung (3) versehene Messfeder (1) für Messaufnehmer mit einer eine Siliciumdioxidschicht (2, 6) aufweisenden Isolation zwischen Messfeder (1) und Dehnungsmessstreifen-Anordnung (3), dadurch gekennzeichnet, dass als Isolation ein zumindest eine Siliciumdioxidschicht (2 bzw. 6) und zumindest eine Siliciumnitridschicht (4 bzw. 7) umfassendes Schichtsystem vorgesehen ist, und dass eine zumindest die Dehnungsmessstreifen-Anordnung (3) abdeckende Passivierung (11) aus zumindest einer Schicht Silikon-Kautschuk vorgesehen ist.

2. Messfeder nach Anspruch 1, dadurch gekennzeichnet, dass die Dicke einer Siliciumdioxidschicht (2 bzw. 6) mindestens 500 nm beträgt.

3. Messfeder nach Anspruch 1, dadurch gekennzeichnet, dass die Dicke einer Siliciumnitridschicht (4 bzw. 7) annähernd 250 nm beträgt.

4. Messfeder nach einem oder mehreren der vorhergehenden Ansprüche, dadurch gekennzeichnet, dass eine Siliciumdioxidschicht (2) der Messfeder (1) benachbart angeordnet ist.

5. Messfeder nach Anspruch 4, dadurch gekennzeichnet, dass das Schichtsystem der Isolation mehrere, vorzugsweise zwei aufeinanderfolgende Schichtfolgen (5, 5') aus je einer Siliciumdioxidschicht (2 bzw. 6) und einer Siliciumnitridschicht (4 bzw. 7) umfasst.

6. Messfeder nach einem oder mehreren der vorhergehenden Ansprüche, dadurch gekennzeichnet, dass zwischen Messfederoberfläche und Siliciumdioxidschicht (2) eine Zwischenschicht zur Haftverbesserung vorgesehen ist.

7. Messfeder nach einem oder mehreren der vorhergehenden Ansprüche, dadurch gekennzeichnet, dass die Passivierung (11) eine zwischen Dehnungsmessstreifen-Anordnung (3) und Silikon-Kautschukschicht angeordnete Schicht (12) aus Chrom- und Siliciumoxiden aufweist.

8. Verfahren zur Herstellung einer Messfeder nach Anspruch 1, dadurch gekennzeichnet, dass auf die Messfederoberfläche oder auf eine auf der Messfederoberfläche aufgebrachte Zwischenschicht eine Siliciumdioxidschicht (2) als erste Schicht der Isolation und auf diese zumindest eine Schicht Siliciumnitrid aufgebracht wird, dass auf die Isolation die Dünnfilm-Dehnungsmessstreifen-Anordnung (3) mit zugeordneter Kontaktierung (8, 9) aufgebracht wird, und dass das Ganze mit einer Passivierung (11) aus zumindest einer Schicht Silikon-Kautschuk überzogen wird.

9. Verfahren nach Anspruch 8, dadurch gekennzeichnet, dass die Schichtfolge (5 bzw. 5') aus je einer Schicht aus Siliciumdioxid und Siliciumnitrid (2, 4 bzw. 6, 7) mehrfach zwischen der Messfeder (1) und der Dünnfilm-Dehnungsmessstreifen-Anordnung (3) aufgebracht wird.

10. Verfahren nach Anspruch 8 und/oder Anspruch 9, dadurch gekennzeichnet, dass eine CrSi-Dehnungsmessstreifen-Anordnung (3) aufgedampft wird und vor dem Aufbringen der Silikon-Kautschukschicht reaktiv eine Chrom- und Siliciumoxide aufweisende Schicht (12) aufgedampft wird.

## Claims

1. Measurement spring (1), provided with a thin film strain gauge arrangement (3), for measurement pick ups with an insulation between the measurement spring (1) and the strain gauge arrangement (3), said insulation having a silicon dioxide layer (2, 6) characterised in that a layer system including at least one silicon dioxide layer (2 or 6) and at least one silicon nitride layer (4 or 7) is provided as the insulation, and that a passivation (11) made of at least one silicone rubber layer and covering at least the strain gauge arrangement (3) is provided.

2. A measurement spring according to claim 1, characterised in that the thickness of a silicon dioxide layer (2 or 6) amounts to at least 500 nm.

3. A measurement spring according to claim 1, characterised in that the thickness of a silicon nitride layer (4 or 7) amounts to approximately 250 nm.

4. A measurement spring according to one or more of the preceding claims characterised in that a silicon dioxide layer (2) is arranged adjacent the measurement spring (1).

5. A measurement spring according to claim 4, characterised in that the layer system of the insulation includes several, preferably two, successive layer sequences (5, 5') comprising a silicon dioxide layer (2 or 6) and a silicon nitride layer (4 or 7) in each case.

6. A measurement spring according to any one of the preceding claims characterised in that between the measurement spring surface and the silicon dioxide layer (2) is provided an intermediate layer for improving adhesion.

7. A measurement spring according to any one of the preceding claims characterised in that the passivation (11) comprises a layer (12), made of chromium and silicon oxides and which is arranged between the strain gauge arrangement (3) and the silicone rubber layer.

8. A method of manufacturing a measurement spring according to claim 1, characterised in that a silicon dioxide layer (2) is applied, as the first layer of the insulation, to the measurement spring surface, or to an intermediate layer applied to the measurement spring surface, and at least one layer of silicon nitride is applied to the said layer (2), that the thin film strain gauge arrangement (3) with associated contacting (8, 9) is applied to the insulation, and that the whole thing is coated with a passivation (11) made of at least one layer of silicone rubber.

9. A method according to claim 8, characterised in that the layer sequence (5 or 5') made of a layer of silicon dioxide and of silicon nitride (2, 4 or 6, 7) in each case is applied several times between the measurement spring (1) and the thin film strain gauge arrangement (3).

10. A method according to claim 8 and/or claim 9, characterised in that a CrSi strain gauge arrangement (3) is vapour deposited and before applying the silicone rubber layer a layer (12) having chromium and silicon oxides is reactively vapour deposited.

## Revendications

1. Ressort de mesure (1) comportant un ensemble jauge extensométrique-couche mince (3), pour des capteurs de mesure pourvus d'une isolation comportant une couche de dioxyde de silicium (2, 6) entre le ressort de mesure (1) et l'ensemble (3) comprenant la jauge extensométrique, caractérisé en ce qu'on prévoit, comme isolation, un ensemble de couches comprenant au moins une couche de dioxyde de silicium (2 ou 6) et au moins une couche de nitrure de silicium (4 ou 7), et en ce qu'on prévoit une passivation (11) recouvrant au moins l'ensemble (3) comprenant la jauge extensométrique, constituée par au moins une couche de caoutchouc silicone.

2. Ressort de mesure selon la revendication 1, caractérisé en ce que l'épaisseur d'une couche de dioxyde de silicium (2 ou 6) est d'au moins 500 nm.

3. Ressort de mesure selon la revendication 1, caractérisé en ce que l'épaisseur d'une couche de nitrure de silicium (4 ou 7) est d'environ 250 nm.

4. Ressort de mesure selon une ou plusieurs des revendications précédentes, caractérisé en ce qu'une couche de dioxyde de silicium (2) est placée au voisinage du ressort de mesure (1).

5. Ressort de mesure selon la revendication 4, caractérisé en ce que l'ensemble de couches de l'isolation comprend plusieurs séries de couches successives, de préférence deux (5, 5'), comprenant chacune une couche de dioxyde de silicium (2 ou 6) et une couche de nitrure de silicium (4 ou 7).

6. Ressort de mesure selon une ou plusieurs des revendications précédentes, caractérisé en ce qu'on prévoit entre la surface du ressort de mesure et la couche de dioxyde de silicium (2) une couche intermédiaire pour améliorer l'adhérence.

7. Ressort de mesure selon une ou plusieurs des revendications précédentes, caractérisé en ce que la passivation (11) comporte une couche (12) d'oxydes de chrome et de silicium placée entre l'ensemble (3) comprenant la jauge extensométrique et la couche de caoutchouc silicone.

8. Procédé de fabrication d'un ressort de mesure selon la revendication 1, caractérisé en ce qu'on applique à la surface supérieure du ressort de mesure ou sur une couche intermédiaire appliquée à la surface supérieure du ressort de mesure une couche de dioxyde de silicium (2), en tant que première couche de l'isolation et, sur celle-ci, au moins une couche de nitrure de silicium, en ce qu'on applique sur l'isolation l'ensemble (3) comprenant la couche mince et la jauge extensométrique avec bonding (8, 9) correspondant, et en ce qu'on recouvre l'ensemble d'une passivation (11) comprenant au moins une couche de caoutchouc silicone.

9. Procédé selon la revendication 8, caractérisé en ce que la série de couches (5 ou 5') comprenant dans chaque cas une couche de dioxyde de silicium et de nitrure de silicium (2, 4 ou 6, 7) est appliquée plusieurs fois entre le ressort de mesure (1) et l'ensemble (3) comprenant la couche mince et la jauge extensométrique.

10. Procédé selon la revendication 8 et/ou la revendication 9, caractérisé en ce qu'on dépose sous vide un ensemble CrSi-jauge extensométrique (3) et l'on dépose dans le vide par voie réactive, avant d'appliquer la couche de caoutchouc silicone, une couche (12) comportant des oxydes de chrome et de silicium.

8    3    12    9

11

5'

7

6

5

4

2

10

1

**Fig. 1**

8    3    9

11

5'

7

6

5

4

2

1

7

**Fig. 2**